# EUROPEAN PATENT APPLICATION

(11) **EP 2 404 952 A1**
(43) Date of publication of application: **11.01.2012**
(21) Application number: 10748704.3
(22) Date of filing: 01.03.2010
(51) Int. Cl.: C08J 3/03, B32B 27/32, C08F 8/44, C08J 7/04, C09D 123/08

(54) **AQUEOUS DISPERSION, PROCESS FOR PRODUCING SAME, AND LAYERED PRODUCT**

(30) Priority: 03.03.2009 JP 2009049692
(71) Applicant: Du Pont-Mitsui Polychemicals Co., Ltd., Tokyo 105-7117 (JP)
(72) Inventor: ITO, Toshihiro, Ichihara-shi Chiba 299-0108 (JP); FUJIWARA, Akira, Ichihara-shi Chiba 299-0108 (JP)
(74) Representative: Gulde Hengelhaupt Ziebig & Schneider
(86) International application number: PCT/JP2010/053233
(87) International publication number: WO 2010/101109

(57) **Abstract**

Disclosed is a method for producing an aqueous dispersion, which includes using ammonia (B) to neutralize and disperse an ethylene/methacrylic acid copolymer (A) in an aqueous medium in the presence of monohydric alcohol (C) containing 3 or more carbon atoms. The process allows for dispersion with ammonia and production of a low viscosity aqueous dispersion with better dispersibility and higher uniformity of the dispersed particles than a conventional process with ammonia neutralization.

## Description

### TECHNICAL FIELD

The present invention relates to an aqueous dispersion produced by dispersing an ethylene-methacrylic acid copolymer in water using ammonia, a method for producing the dispersion, and a coated substrate formed using the dispersion.

### BACKGROUND ART

Aqueous dispersions of ethylene-unsaturated carboxylic acid copolymers such as ethylene-acrylic acid copolymers and ethylene-methacrylic acid copolymers have been known for a long time, and a variety of such copolymers are commercially available. Among them, a dispersion produced by dispersing the copolymer as described above in water using an alkali metal compound is easy to produce and thus it has relatively few constraints on the copolymer from which the dispersion is produced. Therefore, the dispersion has been widely used.

However, the obtained by applying such dispersion to a substrate has a problem of water resistance, and thus cannot be used without modification in uses that the water resistance is required.

On the one hand, although it is slightly difficult to produce an aqueous dispersion by dispersing the copolymer in water using ammonia, the coating obtained from such aqueous dispersion has an advantage of having excellent water resistance. Especially, ethylene-acrylic acid copolymers are widely known to be superior as the copolymers that can used in the production of an aqueous dispersion using ammonia. For example, it is disclosed that addition of a very small amount of inorganic or organic salt decreases the viscosity of an aqueous solution of an ethylene-(meth) acrylic acid copolymer (see, for example, Patent Document 1).

On the other hand, it is very difficult to disperse an ethylene-methacrylic acid copolymer, which the ethylene-methacrylic acid copolymer being, in general, well dispersed in water using alkali metal, using ammonia alone. It is known that addition of a small amount of a surfactant or the like as auxiliary agents of dispersion allows for production of an aqueous dispersion of an ethylene-methacrylic acid copolymer. But the addition of such the auxiliary agents is not preferred, because of problems of the water resistance of the coating, contamination due to bleedout, and the like.

In association with the foregoing, an aqueous dispersion formed by using ammonia in an excess amount based on the number of moles of the carboxyl groups in an ethylene-methacrylic acid copolymer that has a certain acid content to neutralize the carboxyl groups is disclosed (see, for example, Patent Document 2). Patent Document 2 describes that the smaller amount of ammonia (the smaller degree of the neutralization) cannot provide the stable aqueous dispersion.

An aqueous dispersion formed by using 50 to 120 mole% of ammonia based on the number of moles of the carboxyl groups in an ethylene-methacrylic acid copolymer to neutralize the carboxyl groups is also known (see, for example, Patent Document 3). To stably disperse the copolymer using such amount of ammonia, however, it is required to additionally use a metal ion.

Furthermore, regarding an aqueous dispersion of an ethylene copolymer including an ethylene-methacrylic acid copolymer, use of a solvent combination of water and lower aliphatic alcohol as an aqueous dispersion medium is disclosed (see, for example, Patent Document 4). In Patent Document 4, an ethylene-acrylic acid copolymer is used as the ethylene copolymer in all of the examples, and the process for forming the aqueous dispersion is not described.

Patent Document 1: Japanese Patent Application Laid-Open (JP-A) No. 54-61249
Patent Document 2: Japanese Patent Application Laid-Open (JP-A) No. 2000-248141
Patent Document 3: Japanese Patent Application Laid-Open (JP-A) No. 2000-198949
Patent Document 4: Japanese Examined Patent Application (JP-B) No. 5-54823

### DISCLOSURE OF INVENTION

### PROBLEM TO BE SOLVED BY THE INVENTION

Use of ammonia in a large amount that is 100 mole% or more based on the number of moles of the carboxyl groups in a copolymer (at a high degree of the neutralization) tends to allow for dispersion. However, when the copolymer has been dispersed at high shear stress such as at a high stirring speed, or the copolymer has been dispersed by stirring at a high temperature and then the resultant has been cooled at a slow rate by, for example leaving it to stand at room temperature, the resultant dispersion is insufficient as an aqueous dispersion, because the dispersion exhibits high viscosity, the residues increase, or the like. And, in the viewpoint of improvement of an use environment for the aqueous dispersion, problems are occured due to increased odor.

The present invention has been developed in view of the foregoing. In the above situation, what is needed is a method for producing an aqueous dispersion which allows for dispersion using ammonia (especially, dispersion using a small amount of ammonia (with a small degree of the neutralization)) which has been difficult, and which produces an aqueous dispersion with lower viscosity, more excellent dispersibility and higher uniformity of the dispersed particles than a conventional process with ammonia neutralization.
What is also needed is an aqueous dispersion with a low viscosity and a stable dispersibility, and a coated substrate with excellent water resistance.

### MEANS FOR SOLVING THE PROBLEM

The invention is based on the fact that dispersion is stabilized by adding ammonia in the presence of a certain amount of a certain alcohol as a auxiliary agents of dispersion in the dispersion step, without increasing the degree of the neutralization of the acid groups such as the carboxyl groups in an ethylene-methacrylic acid copolymer.

The specific means for solving the problems as described above are as follows:
<1> A method for producing an aqueous dispersion, wherein the process including using ammonia (B) to neutralize and disperse an ethylene/methacrylic acid copolymer (A) in an aqueous medium in the presence of monohydric alcohol (C) containing 3 or more carbon atoms.

<2> The method for producing an aqueous dispersion of the invention according to the <1>, wherein 40 mole% or more of the ammonia (B) is added based on the number of moles of carboxyl groups in the ethylene/methacrylic acid copolymer (A) to neutralize and disperse the ethylene/methacrylic acid copolymer (A) in the presence of 1 to 30 mass% of the monohydric alcohol (C) based on the total mass of water, the ethylene-methacrylic acid copolymer, the ammonia, and the monohydric alcohol.

<3> The method for producing an aqueous dispersion according to the <1> or <2>, wherein the ethylene/methacrylic acid copolymer (A) has a melt flow rate (at a temperature of 190°C and a load of 2160 g in accordance with JIS K7210-1999) of 10 to 1000 g/10 min.

<4> The method for producing an aqueous dispersion according to any one of the <1> to <3>, wherein the ethylene/methacrylic acid copolymer (A) is an ethylene-methacrylic acid copolymer that contains 10 mass% or more of constituent units derived from methacrylic acid based on the total mass of the ethylene-methacrylic acid copolymer.

<5> The method for producing an aqueous dispersion according to any one of the <1> to <4>, wherein the monohydric alcohol (C) is an aliphatic saturated alcohol. In another preferred embodiment, the monohydric alcohol (C) is an alicyclic alcohol.

<6> The method for producing an aqueous dispersion according to any one of the <1> to <5>, wherein the method produces an aqueous dispersion that has a concentration of solids of the ethylene-methacrylic acid copolymer of 40 mass% or less based on the total mass of the aqueous dispersion.

<7> The method for producing an aqueous dispersion according to any one of the <1> to <6>, wherein the methacrylic acid in the ethylene/methacrylic acid copolymer (A) has a copolymerization ratio of 10 to 25 mass%.

<8> The method for producing an aqueous dispersion according to any one of the <2> to <7>, wherein the ammonia (B) is added in the range of from 40 mole% to 150 mole% based on the number of moles of the carboxyl groups.

<9> The method for producing an aqueous dispersion according to the <8>, wherein the ethylene/methacrylic acid copolymer (A) is neutralized in an amount such that the resultant concentration of solids is 5 to 30 mass%.

<10> The method for producing an aqueous dispersion according to any one of the <1> to <9>, wherein the ethylene/methacrylic acid copolymer (A) is neutralized and dispersed in the presence of 1 to 10 mass% of the monohydric alcohol (C) based on the total mass of water, the ethylene-methacrylic acid copolymer, the ammonia, and the monohydric alcohol.

<11> The method for producing an aqueous dispersion according to any one of the <1> to <10>, wherein the monohydric alcohol (C) contains 3 to 10 carbon atoms.

<12> The method for producing an aqueous dispersion according to any one of the <1> to <11>, wherein the monohydric alcohol (C) is an aliphatic saturated alcohol containing 3 to 4 carbon atoms.

<13> An aqueous dispersion produced using the method for producing an aqueous dispersion according to any one of the <1> to <12>.

<14> A coated substrate that includes a substrate and a coating formed by using (for example, applying and drying) the aqueous dispersion according to the <13>.

### EFFECT OF THE INVENTION

The present invention may provide a method for producing an aqueous dispersion which allows for dispersion using a smaller amount of ammonia and produces an aqueous dispersion with lower viscosity, more excellent dispersibility and higher uniformity of the dispersed particles than a conventional process with ammonia neutralization. The process of the invention also may reduce the degree of the ammonia neutralization. Additionally, the process may avoid deterioration of the use environment due to odor. And when the resultant aqueous dispersion is used to form a coating on a variety of substrates, the coating may exhibits excellent water resistance.
The invention may also provide an aqueous dispersion with a low viscosity and a stable dispersibility. Additionally, the invention may provide a coated substrate with excellent water resistance.

### BEST MODE FOR CARRYING OUT THE INVENTION

Hereinafter, the aqueous dispersion, the method for producing it, and a coated substrate formed using it according to the invention will be described in detail.

The method for producing an aqueous dispersion according to the invention is to use ammonia (B) to neutralize and disperse ethylene/methacrylic acid copolymer (A) in an aqueous medium in the presence of monohydric alcohol (C) containing 3 or more carbon atoms.

In the invention, addition of ammonia to an aqueous medium that includes a monohydric alcohol containing 3 or more carbon atoms to disperse an ethylene-methacrylic acid copolymer allows for stabilization of the dispersibility of the aqueous dispersion. Thus, the copolymer may be well dispersed without increasing the degree of neutralization by ammonia of the acid groups (especially, carboxyl groups) in the copolymer, and the uniformity of the dispersed particles may be improved. This allows for inhibition of the increase in the viscosity and production of an aqueous dispersion with a low viscosity and a stable dispersibility. And the coating formed using such aqueous dispersion has excellent water resistance.

The aqueous dispersion formed by using the method for producing an aqueous dispersion according to the invention contains at least one of ethylene-methacrylic acid copolymers that contain at least constituent units derived from ethylene and constituent units derived from methacrylic acid (hereinafter referred to as "the EMAA copolymer in the invention"). The ethylene-methacrylic acid copolymers may be graft copolymers having methacrylic acid grafted to an ethylene homopolymer as well as random copolymers of ethylene and methacrylic acid. However, the random copolymers are preferable, because the graft copolymers can contain no significant amount of methacrylic acid, and the random copolymers are more easily available and provide coating with a higher performance.

In addition to the bicopolymer that consists of constituent units derived from ethylene and constituent units derived from methacrylic acid, the ethylene-methacrylic acid copolymer (EMAA copolymer) may be a tercopolymer or higher-order copolymer that also contains constituent units derived from other monomer(s) in addition to the constituent units described above to the extent that the constituent units derived from the other monomer(s) do not impair the properties. The tercopolymer or higher-order copolymer as described above may be formed by random copolymerization of all of the monomers or by graft polymerization of part of the monomers. However, the random copolymer is preferable, because it is more easily available and provides coating with a higher performance.

The other monomers described above may include, for example, vinyl esters such as vinyl acetate and vinyl propionate; unsaturated carboxylic esters such as methyl acrylate, ethyl acrylate, isobutyl acrylate, n-butyl acrylate, methyl methacrylate, isobutyl methacrylate, dimethyl maleate, and diethyl maleate; carbon monoxide; and the like.

The other monomers described above may be contained, for example, 20 mass% or less based on the total mass of the copolymer. From the view point of the dispersion stability at a high solid concentration, the other monomers described above are preferably contained at 10 mass% or less based on the total mass of the copolymer.

The EMAA copolymer in the invention is required to have constituent units derived from methacrylic acid. The necessity of the constituent units means that methacrylic acid is actively contained.
When the constituent units derived from methacrylic acid are contained in a small amount, it is difficult to produce an aqueous dispersion with stable dispersibility or even if the dispersion is produced, the dispersion tends to exhibits high viscosity. To allow for easy production of a practical dispersion with stable viscosity, the constituent units derived from methacrylic acid are preferably present at 10 mass% or more based on the total mass of the copolymer. Especially, the methacrylic acid has preferably a copolymerization ratio of 10 to 25 mass%, and more preferably 15 to 25 mass%. When the methacrylic acid has a copolymerization ratio of 15 mass% or more, a stable aqueous dispersion with less aggregation, more excellent dispersibility, and more excellent uniformity of the dispersed particles is easily obtained.

The EMAA copolymer in the invention has preferably a melt flow rate (hereinafter sometimes referred to as MFR) of 10 to 1000 g/10 min. More preferably, the EMAA copolymer has an MFR of 20 to 600 g/10 min. As used herein, MFR is measured at a temperature of 190°C and a load of 2160 g in accordance with JIS K7210-1999.

The ethylene-methacrylic acid copolymer in the invention may be obtained by radical copolymerization at a high temperature and a high pressure. The copolymer is commercially available under the name of NUCREL (manufactured by Dupont-Mitsui Polychemicals Co., LTD).

In the method for producing an aqueous dispersion according to the invention, a dispersion may be produced by using ammonia to neutralize all or part of the carboxyl groups in the EMMA copolymer in the invention as described above and dispersing the copolymer in water.

When the EMAA copolymer in the invention is neutralized using ammonia, the degree of neutralization by ammonia is preferably 40 mole% or more, more preferably in the range of from 40 mole% to 150 mole% based on the number of the moles of the acid groups, especially carboxyl groups in the EMAA copolymer, in order to inhibit the increase in the viscosity. The invention may improve the dispersion stability, while keeping the degree of the neutralization, that is, the amount of the ammonia low based on the amount of the EMAA copolymer in the invention to inhibit the increase in the viscosity. Still more preferably, the degree of neutralization by ammonia is 40 to 100 mole%.

In the invention, monohydric alcohol containing 3 or more carbon atoms is included in an aqueous medium as an auxiliary agent of dispersion, when dispersing the ethylene-methacrylic acid copolymer in the invention. Inclusion of the monohydric alcohol containing 3 or more carbon atoms allows for improvement of the disperse stability and uniform dispersion of the particles, resulting in reduction in residues. It is especially preferred to add the monohydric alcohol containing 3 or more carbon atoms in the range of from 1 mass% to 30 mass% based on the total mass of water, the EMAA copolymer, (aqueous) ammonia, and the monohydric alcohol. Addition of the alcohol within the above range effectively improves the disperse stability even using ammonia neutralization, which usually dose not allow for dispersion. As the result, dispersed state that dispersed uniform particles and is not likely to generate residues may be formed. Furthermore, the monohydric alcohol maximizes the nature of the EMMA copolymer in an aqueous dispersion. Thus, the alcohol is preferably added in as small an amount as possible, and in the invention, more preferably in the range of from 1 mass% to 15 mass% and still more preferably from 1 mass% to 10 mass% based on the total mass as described above. Even the amount in such range allows for improvement of the dispersion stability and uniform dispersion of the particles, and an aqueous dispersion with fewer residues may be produced.

A mixed form of the monohydric alcohol is not specially limited, as far as the form allows for the neutralization by ammonia and the dispersion in an aqueous medium containing the monohydric alcohol. The ammonia may be added after prior mixing of the monohydric alcohol into an aqueous medium. Alternatively, the monohydric alcohol and ammonia may be added simultaneously to an aqueous medium.

The monohydric alcohol is preferably an alcohol containing 3 to 10 carbon atoms. The monohydric alcohol may include alcohols having a structure with a cyclic ring, a branched structure, and the like, as well as linear alcohols. The monohydric alcohol may also be any of primary alcohols, secondary alcohol, and tertiary alcohols.

The monohydric alcohol includes, for example, aliphatic saturated alcohols, alicyclic alcohols, and the like. The aliphatic saturated alcohols include, for example, 1-propanol, isopropanol, 1-butanol (n-butanol), 1-hexanol, 1-pentanol, cyclohexanol, and the like. Among them, the aliphatic saturated alcohols containing 3 to 4 carbon atoms are preferable in view of their properties, availability, and costs. For example, isopropanol and 1-butanol are preferably used due to their availability and the like. The alicyclic alcohols preferably include, for example, cyclopentanol, cyclohexanol, and the like.

Preferably, the aqueous dispersion in the invention has a concentration of the EMMA copolymer in the invention (a solid content [mass]) of 40 mass% or less. The solid concentration of 40 mass% or less allows for production of an excellent aqueous dispersion. For example, when the aqueous dispersion is used to produce rust inhibitor paint for a steel material, the resultant paint is likely to form coating coating with a highly uniform. Especially, the solid concentration is preferably 5 to 30 mass% and more preferably 15 to 25 mass%.

At the solid concentration described above, the aqueous dispersion in the invention has preferably a viscosity (at 25°C) of 100 to 20000 mPa·s, and more preferably 100 to 2000 mPa·s, although the viscosity is adjusted as needed in accordance with intended coating properties, handling characteristics, and the like.
The viscosity is measured with adjustment of the temperature of the aqueous dispersion composition to 25°C using a Brookfield viscometer (manufactured by Brookfield Engineering Laboratories, Inc.).

As described below, the method for producing an aqueous dispersion according to the invention allows for stable production of an aqueous dispersion. An ethylene-methacrylic acid copolymer, ammonia, and a monohydric alcohol containing 3 or more carbon atoms (auxiliary agents of dispersion) are dispersed with stirring or the like in an aqueous medium such as water using shear force to give an aqueous dispersion composition. Preferably, the material to be dispersed is heated to 90°C or higher in this dispersion step. In order to improve the dispersion rate and increase the productivity, the dispersion may be carried out at a high temperature of, for example, 130°C to 160°C or by using high shearing force given by stirring at a high speed and the like. For example, in a preferred embodiment, (1) water, (2) the EMAA copolymer in the invention as described above in an amount such that the resultant solid concentration is preferably 5 to 30 mass%, (3) ammonia in an amount necessary to achieve the solid concentration described above, relative to the carboxyl groups in the EMAA copolymer (preferably an amount of 40 to 150 mole% based on the number of moles of the carboxyl groups), and (4) a monohydric alcohol having 3 or more carbon atoms (auxiliary agents of dispersion) (preferably in an amount of from 1 mass% to 30 mass% based on the total mass, that is, the total mass of the materials (1) to (3) and (4)) are placed in a reactor that can impart shear force such as, for example, an autoclave equipped with a stirrer and allowed to react at a given temperature using shear force to give a dispersion. The reaction time is about 10 to 120 minutes, although it varies depending on the reaction temperature and other reaction conditions.

The aqueous dispersion formed using the method for producing an aqueous dispersion according to the invention is highly stable and flat in the dispersed particle size and the viscosity in long-term storage.

When an aqueous dispersion is produced using the method for producing an aqueous dispersion according to the invention, a variety of additives may added in addition to the materials described above, where necessary. Such additives include polyhydric alcohols such as glycerin, ethylene glycol, polyethylene glycol, and polypropylene glycol; water-soluble epoxy compounds; methanol and ethanol; ethers such as ethylene glycol monomethyl ether, ethylene glycol monoethyl ether, propylene glycol monomethyl ether, propylene glycol diethyl ether, diethylene glycol monoethyl ether, and dipropylene glycol monomethyl ether; esters such as ethylene glycol monoacetate and propylene glycol monoacetate; and antioxidants, weathering stabilizers, ultraviolet absorber, light stabilizers, antistatic agents, plasticizers, pigments, dyes, antibacterial agents, lubricants, antiblocking agents, rust inhibitors, adhesives, crosslinking agents, writability improving agents, inorganic fillers, foaming agents, and the like.
The monohydric alcohol containing 3 or more carbon atoms that is used when producing the aqueous dispersion of the invention may be added after the aqueous dispersion is produced.

The aqueous dispersion of the invention may be combined with another aqueous dispersion that contains a polymer in any proportion. Combination with the another aqueous dispersion allows for modification of the aqueous dispersion of the invention. Conversely, the another aqueous dispersion may also be modified. In this case, the solid ratio of the aqueous dispersion of the invention (a) to the another aqueous dispersion that contains a polymer (b) (a/b, mass ratio) is generally 10/90 to 90/10, and especially preferably 20/80 to 80/20. The another aqueous dispersion that contains a polymer is desirably selected from dispersions that have a pH of 7 or more or a pH adjusted to 7 or more using aqueous ammonia or the like and that do not turn into a gel when they are combined with the aqueous dispersion of the invention. Also, the another aqueous dispersion that contains a polymer is desirably selected from dispersions that have an average dispersed particle size of 1 to 10000 nm and preferably 5 to 5000 nm and a solid concentration of 2 to 60 mass% and especially 5 to 50 mass%. Examples of the another aqueous dispersion that contains a polymer include aqueous dispersions of ethylene-acrylic acid copolymers, polyvinyl acetates, ethylene-vinyl acetate copolymers, polyvinyl chlorides, polyvinylidene chlorides, water-soluble acrylic resins, acrylamide resins, methacrylamide resins, acrylonitrile resins, methacrylonitrile resins, styrene-acrylic acid copolymers, water-soluble polyurethane resins, water-soluble styrene-maleic acid copolymers, styrene-butadiene copolymers, high-impact polystyrene resins, butadiene resins, polyester resins, acrylonitrile-butadiene copolymers, polyethylene resins, polyethylene oxide resins, polypropylene-ethylene copolymers, maleic anhydride-grafted polyolefins such as maleic anhydride-grafted propylene-ethylene copolymers, chlorinated polyethylenes, chlorinated polypropylenes, EPDM (ethylene-propylene-diene copolymers), phenol resins, silicone resins, epoxy resins, and the like.
These materials may be used individually or in combination of two or more.

Additionally, two or more of the another aqueous dispersions that contain a polymer may be used. A mixed dispersion of the aqueous dispersion of the invention and the another aqueous dispersion(s) may be prepared by mixing the plural materials to be added with stirring at a room temperature. The mixed dispersion may be used in the same manner as for the aqueous dispersion of the invention. In preparation of the mixed dispersion, the base resin of the aqueous dispersion of the invention (the EMMA copolymer) and the base resin(s) of the another aqueous dispersion(s) to be added may be previously melt- or dryblended and then dispersed in water. The present invention is not intended to be limited to such process.

The aqueous dispersion of the invention or the mixed dispersion of the aqueous dispersion of the invention and the another aqueous dispersion may be, for example, applied onto any substrate to form a coating and subsequently to form a coated substrate that has the substrate and the coating used the aqueous dispersion of the invention.
The coated substrate of the invention may be formed by, for example, applying the aqueous dispersion of the invention or the mixed dispersion of the aqueous dispersion of the invention and the another aqueous dispersion onto a substrate and drying the dispersion.

The substrate includes, for example, molded articles such as sheets and films formed using a variety of polymers including high-, medium-, and low-density polyethylenes, ethylene-α-olefin copolymers, ethylene-vinyl acetate copolymers, ethylene-(meth) acrylate ester copolymers, ethylene-(meth) acrylic acid copolymers or ionomers thereof, ethylene-(meth) acrylic acid-(meth) acrylate ester copolymers or ionomers thereof, polypropylenes, olefin copolymers such as poly-1-butene and poly-4-methyl-1-pentene, polystyrenes, ABS resins, styrene resins such as styrene-butadiene block copolymers, polyesters such as polyethylene terephthalates, polyamides such as nylon 6 and nylon 66, polyvinyl chlorides, and blends in any proportion thereof; metals such as iron, copper, aluminum, and stainless steel; natural materials such as wood and paper; natural and synthetic leather; and fibers and fabrics of nylon, polyester, acrylic, urethane, rayon, and the like.

A method for forming on a substrate a coating that made of the aqueous dispersion of the invention includes known methods such as, for example, coating techniques including roll coating, bar coating, air knife coating, reverse roll coating, doctor coating, brush coating, spray coating, and the like; printing techniques including screen printing, gravure printing, engraved roll printing, flexographic printing, and the like; and methods of dipping the substrate into the aqueous dispersion of the invention.

After forming a coating that made of the aqueous dispersion on a substrate by coating or the like, the coating may be allowed to dry naturally in air or be forced dried by heating to evaporate water. In this way, more uniform coating may be obtained. The heat-drying at a temperature of about 80 to 200°C allows for volatile materials such as water and amine to evaporate. This can provide a coated substrate that has a coating with a desired thickness.

Although the coating formed by, for example, applying and drying the dispersion may have any thickness, the coating generally has a thickness of 1 to 20 µm, preferably a thickness of 1 to 10 µm. The thickness within the range allows for, for example, reduction in the volume of packing materials. And the thickness may impart low-temperature heat-sealability. The thickness also allows for formation of an anti-corrosion coating.
The resultant coating may be crosslinked by electron beam radiation in order to improve its water resistance, durability, and the like.

The aqueous dispersion of the invention can be used as rust inhibitor paint or a raw material for rust inhibitor paint. The aqueous dispersion of the invention can also be used to produce a heat-sealable coated substrate by applying the dispersion onto a substrate and drying the dispersion.

A form of the substrate may be any of compact such as films, sheets, containers, and the like.
Examples of the materials of the substrate include polyolefins, olefin polymers such as ethylene-polar monomer copolymers such as ethylene-vinyl acetate copolymers, ethylene-(meth) acrylate ester copolymers, ethylene-(meth) acrylic acid copolymers or ionomers thereof, ethylene-(meth) acrylic acid-(meth) acrylate ester copolymers or ionomers thereof, polyesters, polyamides, polycarbonates, polyvinyl chlorides, polystyrenes, styrene polymers such as ABS resins and styrene-butadiene block copolymers, vinyl alcohol polymers such as polyvinyl alcohols and ethylene-vinyl alcohol copolymers, and any blends thereof, metals, woods, papers, fiber products, leathers, and the like.

The polyolefins include homopolymers of ethylene, propylene, 1-butene, 1-hexene, 1-octene, 1-decene, 1-dodecene, 4-methyl-1-pentene, and the like, or copolymers of these olefins. The specific examples are a variety of polyethylenes, polypropylenes, poly-4-methyl-1-pentene, and the like. The polyethylenes include high density polyethylenes, medium density polyethylene, high pressure low density polyethylenes, linear low density polyethylenes (ethylene-α-olefin copolymers) and the like. The α-olefin in the linear low density polyethylenes may include propylene, 1-butene, 1-pentene, 1-hexene, 1-octene, 1-decene, 1-dodecene, 4-methyl-1-pentene, and the like. The linear low density polyethylenes may be produced with any catalyst system. For example, the linear low density polyethylenes may be produced by copolymerization in the presence of a single site catalyst such as, for example, a metallocene catalyst or a multi site catalyst such as a Ziegler catalyst.

Examples of the polyesters that can be used for the substrate include polyethylene terephthalate, polytrimethylene terephthalate, polytetramethylene terephthalate, polyethylene-2,6-naphthalene dicarboxylate, and the like. Examples of the polyamides include those produced by polycondensation of dicarboxylic acid and diamine, ring-opening polymerization of lactam, polycondensation of aminocarboxylic acid, copolymerization of lactam, dicarboxylic acid, and diamine, and the like. For example, commercially available polyamides such as nylon 4, nylon 6, nylon 46, nylon 66, nylon 612, nylon 6T, nylon 11, nylon 12, nylon 6/66, nylon 6/12, nylon 6/610, nylon 66/12, nylon 6/66/610, and MX nylon may be used. Especially, suitable polyamides are Nylon 6 and nylon 66.

As the substrate for the heat-sealable coated substrate as described above, a film substrate or metal substrate is preferable in view of the use as a packaging material or as a material for a corrosion inhibitor for metals such as rust inhibitor paint. The film substrate has suitably a thickness of, for example, about 10 to 300 µm, and especially, for the purpose of reduction of volume, the film has preferably a thickness of about 10 to 100 µm. In particular, the film has suitably great functionality such as, for example, excellent gas barrier properties, moisture exclusion, heat resistance, transparency, toughness, and wear resistance. The film includes, for example, a stretched film or unstretched film of polar material or nonpolar material. The film substrate may be a monolayer film or a laminated film that consists of two or more layers. The laminated film may have an adhesive layer as the interlayer. The specific examples of the film substrate include unstretched, uniaxially stretched, or biaxially-stretched films of a polyester, a polyamide, an ethylene-vinyl alcohol copolymer, and the like; stretched films of a polyolefin such as biaxially-stretched films of a polypropylene and uniaxially stretched films of a high density polyethylene; unstretched films of a polyolefin such as poly-4-methyl pentene, a polypropylene, and a polyethylene; metal or inorganic oxide deposited films such as the films as described above that are deposited with aluminum, silica, and alumina; aluminum foil; paper; natural and semisynthetic fibers; woven or nonwoven fabrics of a semisynthetic or natural fiber; natural and synthetic leathers; and the like.

When the aqueous dispersion of the invention was used as rust inhibitor paint or a raw material for rust inhibitor paint, a rustproof metal substrate is provided. In this case, the metal material that constitutes the substrate is preferably a plate with a thickness of, for example, 500 to 5000 µm and especially 1000 to 2000 µm. The metal material can have a thickness outside of this range.

The metal or inorganic oxide deposited films are produced by depositing a metal such as aluminum or an inorganic oxide such as silica, alumina, magnesia, and titanium oxide on an stretched or unstretched film such as polyester, polyamide, polyvinyl alcohol, ethylene-vinyl alcohol copolymer, polycarbonate, and polyolefin films using vacuum evaporation, chemical plating, sputtering, or the like. Suitably, the deposition thickness is, for example, about 50 to 2000 angstrom.

When the film substrate is a laminated film, the film is preferably a laminated film that contains at least one layer of the films listed above. When the laminated film contains an adhesive layer, an ethylene-unsaturated carboxylic acid copolymer, an ethylene-vinyl acetate copolymer, an ethylene-unsaturated carboxylic ester copolymer, an unsaturated carboxylic acid modified polyolefin, or the like may be used for the adhesive layer.

The substrate may be corona treated in order to improve the adhesiveness and the like, and may be previously primed. Especially, when a resin film is used as the substrate, it is preferred to prime the substrate.

### EXAMPLES

Hereinafter, the invention will be more specifically explained based on Examples, but the invention is not intended to be limited to the following Examples as long as the gist is maintained. The term "ethylene content" refers to the copolymerization ratio of a repeat constituent unit derived from ethylene, and the term "methacrylic acid content" refers to the copolymerization ratio of a repeat constituent unit derived from methacrylic acid. The term "MFR" refers to a melt flow rate measured at a temperature of 190°C and a load of 2160 g in accordance with JIS K7210-1999.

### (Example 1)

Into a 300 ml autoclave, 80 g of an ethylene-methacrylic acid copolymer with an ethylene content of 80 mass%, a methacrylic acid content of 20 mass%, and an MFR of 300 g/ 10 min, 217 g of ion-exchanged water, 25 g of an aqueous ammonia solution with an ammonia concentration of 10 mass%, and 10 g of n-butanol were added and stirred at a temperature of 150°C and a stirring rate of 1200 rpm for an hour. Then, the mixture had an ammonia neutralization ratio (ratio of the ammonia based on the number of moles of the carboxyl groups in the ethylene-methacrylic acid copolymer) of 80 mole%. After that, the mixture was slowly cooled with tap water at a cooling rate of 1 to 3°C/min to give an aqueous dispersion. The resultant aqueous dispersion had a concentration of the solids (hereinafter referred to as "the EMAA copolymer") of 24 mass%.

A coating with a dry thickness of 10 µm was formed by applying the resultant aqueous dispersion onto a polyethylene terephthalate (PET) film (substrate) with a thickness of 100 µm and drying the dispersion to give a coated film.
A coating with a dry thickness of 10 µm was formed by applying the resultant aqueous dispersion onto a 0.5 mm steel plate (substrate) according to JIS G3141 and drying the dispersion to give a coated steel plate.

Then, the resultant aqueous dispersion, coated film, and coated steel plate were evaluated as described below. The results are shown in Table 1 below.

### [1] Dispersibility

The resultant aqueous dispersion was visually observed for evaluation in accordance with the following criteria:

### <Evaluation Criteria>

A: Uniformly dispersed
B: Separated

### [2] Stability

The resultant aqueous dispersion was allowed to stand in air at 23°C for a week and then visually observed for evaluation in accordance with the following criteria:

### <Evaluation Criteria>

A: Uniformly dispersed
B: Separated

### [3] Viscosity

The resultant aqueous dispersion was measured for viscosity at 25°C using a Brookfield viscometer (manufactured by Brookfield Engineering Laboratories, Inc.).

### [4] Transparency

The resultant aqueous dispersion was visually observed for hue and measured for light transmittance at 546 nm using a UV spectrophotometer.

### [5] Particle Diameter

The resultant aqueous dispersion was diluted 5-fold with ion-exchanged water and the volume average particle size (volume average diameter, nm) of the aqueous dispersion was measured using LB-500 dynamic light scattering particle size analyzer (manufactured by Horiba, Ltd.).

### [6] pH

The temperature of the resultant aqueous dispersion was adjusted to 25°C and the pH of the dispersion was measured at 25°C using a pH meter (manufactured by Horiba, Ltd.).

### [7] Residues

50 g of the resultant aqueous dispersion and 150 g of ion-exchanged water were thoroughly mixed and filtered through a 150 mesh metal filter. Then the residues remaining on the filter were weighed.

### [8] Water Resistance

The resultant coated film was allowed to stand in water at 50°C for 7 days, and then evaluated for water resistance in accordance with the following criteria.

### <Evaluation Criteria>

A: Not whitened
B: Partially whitened
C: Whitened

### [9] Corrosion Resistance

The resultant coated steel plate was allowed to stand in water at 23°C for 7 days, and then evaluated for corrosion resistance in accordance with the following criteria.

### <Evaluation Criteria>

A: The coated steel plate had no rust.
B: The coated steel plate had light rust.
C: The coated steel plate was covered with rust on entire surface.

### (Example 2)

An aqueous dispersion, a coated film, and a coated steel plate were prepared and evaluated in the same manner in Example 1, except that an ethylene-methacrylic acid copolymer with an ethylene content of 80 mass%, a methacrylic acid content of 20 mass%, and an MFR of 60 g/10 min was used and that the amount of n-butanol was changed from 10g to 15 g. The resultant aqueous dispersion had a solid concentration of 24 mass%. The evaluation results are shown in Table 1 below.

### (Example 3)

An aqueous dispersion, a coated film, and a coated steel plate were prepared and evaluated in the same manner in Example 1, except that 75 g of an ethylene-methacrylic acid copolymer with an ethylene content of 82 mass%, a methacrylic acid content of 18 mass%, and an MFR of 60 g/10 min, 201 g of ion-exchanged water, and 24 g of an aqueous ammonia solution with an ammonia concentration of 10 mass% (a neutralization ratio of 90 mole%), and 20 g of n-butanol were used. The resultant aqueous dispersion had a solid concentration of 23 mass%. The evaluation results are shown in Table 1 below.

### (Example 4)

An aqueous dispersion, a coated film and a coated steel plate were prepared and evaluated in the same manner in Example 1, except that 75 g of an ethylene-methacrylic acid copolymer with an ethylene content of 85 mass%, a methacrylic acid content of 15 mass%, and an MFR of 60 g/10 min, 203 g of ion-exchanged water, and 22 g of an aqueous ammonia solution with an ammonia concentration of 10 mass% (a neutralization ratio of 100 mole%), and 22 g of n-butanol were used. The resultant aqueous dispersion had a solid concentration of 23 mass%. The evaluation results are shown in Table 1 below.

### (Example 5)

An aqueous dispersion was prepared and evaluated in the same manner in Example 1, except that 80 g of an ethylene-methacrylic acid copolymer with an ethylene content of 80 mass%, a methacrylic acid content of 20 mass%, and an MFR of 500 g/10 min, 224 g of ion-exchanged water, and 16 g of an aqueous ammonia solution with an ammonia concentration of 10 mass% (a neutralization ratio of 50 mole%), and 20 g of n-butanol were used, and that the resultant was evaluated for the properties other than water resistance and corrosion resistance. The resultant aqueous dispersion had a solid concentration of 24 mass%. The evaluation results are shown in Table 1 below.

### (Example 6)

An aqueous dispersion was prepared and evaluated in the same manner in Example 1, except that n-butanol was replaced by isopropanol and that the resultant was evaluated for the properties other than water resistance and corrosion resistance. The evaluation results are shown in Table 1 below.

### (Example 7)

An aqueous dispersion was prepared and evaluated in the same manner in Example 1, except that n-butanol was replaced by 1-hexanol and that the resultant was evaluated for the properties other than water resistance and corrosion resistance. The resultant aqueous dispersion had a solid concentration of 24 mass%. The evaluation results are shown in Table 1 below.

### (Example 8)

An aqueous dispersion was prepared and evaluated in the same manner in Example 1, except that n-butanol was replaced by cyclohexanol and that the resultant was evaluated for the properties other than water resistance and corrosion resistance. The resultant aqueous dispersion had a solid concentration of 24 mass%. The evaluation results are shown in Table 1 below.

### (Example 9)

An aqueous dispersion was prepared and evaluated in the same manner in Example 1, except that n-butanol was replaced by cyclopentanol and that the resultant was evaluated for the properties other than water resistance and corrosion resistance. The evaluation results are shown in Table 1 below.

### (Comparative Example 1)

An aqueous dispersion was prepared and evaluated in the same manner in Example 1, except that n-butanol was replaced by ethanol. The evaluation results are shown in Table 1 below.

### (Comparative Example 2)

An aqueous dispersion was prepared and evaluated in the same manner in Example 1, except that 10g of n-butanol was not used. The evaluation results are shown in Table 1 below.

### (Comparative Example 3)

An aqueous dispersion was prepared and evaluated in the same manner in Example 1, except that n-butanol was replaced by ethylene glycol. The evaluation results are shown in Table 1 below.

### (Comparative Example 4)

An aqueous dispersion was prepared and evaluated in the same manner in Example 1, except that n-butanol was replaced by texanol (2,2,4-trimethyl-1,3-pentanediol monoisobutyrate). The evaluation results are shown in Table 1 below.

**[Table 1]**

| | MAA [Mass %] | MFR [g/ 10 min] | ammonia Neutralization Degree [mole%] | Alcohol | | Dispersibility | Stability | Viscosity [mPa·s] | Particle Size [nm] | Residues [ppm] | Transparency [%] | pH | pH Water Resistance | Corrosion Resistance |
|---|---|---|---|---|---|---|---|---|---|---|---|---|---|---|
| | | | | Type | Content [%] | | | | | | | | | |
| Example 1 | 20 | 300 | 80 | n-butanol | 3 | A | A | 447 | 47 | 37 | 8.6 | 9.4 | A | A |
| Example 2 | 20 | 60 | 80 | n-butanol | 5 | A | A | 345 | 90 | 17 | 1.4 | 9.4 | A | A |
| Example 3 | 18 | 60 | 90 | n-butanol | 6 | A | A | 3100 | 95 | 148 | 0.2 | 9.5 | A | A |
| Example 4 | 15 | 60 | 100 | n-butanol | 7 | A | A | 13500 | 122 | 383 | 0.4 | 9.7 | A | A |
| Example 5 | 20 | 500 | 50 | n-butanol | 6 | A | A | 33 | 194 | 660 | 0.1 or less | 9 | - | - |
| Example 6 | 20 | 300 | 80 | Isopropanol | 3 | A | A | 670 | 81 | 1530 | 0.1 | 9.5 | - | - |
| Example 7 | 20 | 300 | 80 | 1-hexanol | 3 | A | A | 480 | 94 | 3080 | 0.1 or less | 9.5 | - | - |
| Example 8 | 20 | 300 | 80 | Cyclohexanol | 3 | A | A | 1200 | 87 | 180 | 0.1 | 9.3 | - | - |
| Example 9 | 20 | 300 | 80 | Cyclopentanol | 3 | A | A | 574 | 61 | 250 | 3.0 | 9.3 | - | - |
| Comparative Example 1 | 20 | 300 | 80 | ethanol | 3 | B | B | - | - | - | - | - | - | - |
| Comparative Example 2 | 20 | 300 | 80 | - | | B | B | - | - | - | - | - | - | - |
| Comparative Example 3 | 20 | 300 | 80 | ethylene glycol | 3 | B | B | - | - | - | - | - | - | - |
| Comparative Example 4 | 20 | 300 | 80 | texanol | 3 | B | B | - | - | - | - | - | - | - |

| | | | | | | | | | | | | | | |
|---|---|---|---|---|---|---|---|---|---|---|---|---|---|---|
| MAA: Ratio of constituent units derive from methacrylic acid in copolymer | | | | | | | | | | | | | | |

As shown in Table 1 above, Examples could provide a low viscosity and highly uniform aqueous particle dispersion that has excellent dispersibility and excellent storage stability and that is not likely to produce residues when it is filtered. In contrast, the aqueous dispersions of Comparative Examples exhibited inferior dispersibility and lower stability during aging storage.

The entire disclosure of Japanese Patent Application No. 2009-049692 is incorporated herein into this specification by reference.
All documents, patent applications and technical specifications recited in this specifi cation are incorporated herein by reference in this specification to the same extent as if each i ndividual publication, patent applications and technical standard was specifically and individ ually indicated to be incorporated by reference.

## Claims

1. A method for producing an aqueous dispersion comprising using ammonia (B) to neutralize and disperse an ethylene/methacrylic acid copolymer (A) in an aqueous medium in the presence of monohydric alcohol (C) containing 3 or more carbon atoms.

2. The method for producing an aqueous dispersion according to claim 1, wherein 40 mole% or more of the ammonia (B) is added based on the number of moles of carboxyl groups in the ethylene/methacrylic acid copolymer (A) to neutralize and disperse the ethylene/methacrylic acid copolymer (A) in the presence of 1 to 30 mass% of the monohydric alcohol (C) based on the total mass of water, the ethylene-methacrylic acid copolymer, the ammonia, and the monohydric alcohol.

3. The method for producing an aqueous dispersion according to claim 1, wherein the ethylene/methacrylic acid copolymer (A) has a melt flow rate (at a temperature of 190°C and a load of 2160 g in accordance with JIS K7210-1999) of 10 to 1000 g/10 min.

4. The method for producing an aqueous dispersion according to claim 1, wherein the ethylene/methacrylic acid copolymer (A) is an ethylene-methacrylic acid copolymer that contains 10 mass% or more of constituent units derived from methacrylic acid based on the total mass of the ethylene-methacrylic acid copolymer.

5. The method for producing an aqueous dispersion according to claim 1, wherein the monohydric alcohol (C) is an aliphatic saturated alcohol.

6. The method for producing an aqueous dispersion according to claim 1, wherein the monohydric alcohol (C) is an alicyclic alcohol.

7. The method for producing an aqueous dispersion according to claim 1, wherein the method produces an aqueous dispersion that has a concentration of solids of the ethylene-methacrylic acid copolymer of 40 mass% or less based on the total mass of the aqueous dispersion.

8. The method for producing an aqueous dispersion according to claim 1, wherein the methacrylic acid in the ethylene/methacrylic acid copolymer (A) has a copolymerization ratio of 10 to 25 mass%.

9. The method for producing an aqueous dispersion according to claim 2, wherein the ammonia (B) is added in the range of from 40 mole% to 150 mole% based on the number of moles of the carboxyl groups.

10. The method for producing an aqueous dispersion according to claim 9, wherein the ethylene/methacrylic acid copolymer (A) is neutralized in an amount such that the resultant concentration of solids is 5 to 30 mass%.

11. The method for producing an aqueous dispersion according to claim 1, wherein the ethylene/methacrylic acid copolymer (A) is neutralized and dispersed in the presence of 1 to 10 mass% of the monohydric alcohol (C) based on the total mass of water, the ethylene-methacrylic acid copolymer, the ammonia, and the monohydric alcohol.

12. The method for producing an aqueous dispersion according to claim 1, wherein the monohydric alcohol (C) contains 3 to 10 carbon atoms.

13. The method for producing an aqueous dispersion according to claim 1, wherein the monohydric alcohol (C) is an aliphatic saturated alcohol containing 3 to 4 carbon atoms.

14. An aqueous dispersion produced using the method for producing an aqueous dispersion according to claim 1.

15. A coated substrate that comprises a substrate and a coating formed on the substrate by using the aqueous dispersion according to claim 14.
